# EUROPÄISCHE PATENTSCHRIFT

(11) **EP 2 683 575 B1**
(45) Veröffentlichungstag und Bekanntmachung des Hinweises auf die Patenterteilung: **10.08.2016**
(21) Anmeldenummer: 12714212.3
(22) Anmeldetag: 08.03.2012
(51) Int. Cl.: B60N 2/20, B60N 2/22

(54) **VERSTELLMITTEL FÜR EINEN FAHRZEUGSITZ**
ADJUSTMENT MEANS FOR A VEHICLE SEAT
MOYEN DE RÉGLAGE POUR UN SIÈGE DE VÉHICULE

(30) Priorität: 11.03.2011 DE 102011013723
(43) Veröffentlichungstag der Anmeldung: 15.01.2014
(73) Patentinhaber: Johnson Controls GmbH, 51399 Burscheid (DE)
(72) Erfinder: KIRUBAHARAN, Albert, Reginold, 51399 Burscheid (DE); MEDVED, Andrej, SK-911 01 Trencin (SK); MERES, Eduard, SK-914 43 Om Enie (SK)
(74) Vertreter: Wolff, Felix
(86) Internationale Anmeldenummer: PCT/EP2012/001032
(87) Internationale Veröffentlichungsnummer: WO 2012/123084

(56) Entgegenhaltungen:
- US-A1- 2010 072 802
- US-B1- 6 619 743

## Beschreibung

Die vorliegende Erfindung betrifft ein Verstellmittel eines Fahrzeugsitzes, mit einem Sitzteil und einer Rückenlehne, das den Neigungswinkel der Rückenlehne relativ zu dem Sitzteil verändert und das einen Sitzteilbeschlag, der mit dem Sitzteil verbunden ist und einen Lehnenbeschlag, der mit der Rückenlehne verbunden ist, aufweist, wobei an den Beschlägen Anschläge vorgesehen sind, die den Verstellbereich der Rückenlehne relativ zu dem Sitzteil begrenzen.

Derartige Verstellmittel sind aus dem Stand der Technik bekannt. US 2010 0072802 A1, der als nächstliegender stand der Technik berücksichtizt wird, offenbart ein Verstellmittel für einen Fahrzeugsitz, welches aus zwei konzentrisch angeordneten Passteilen besteht, welche sich relativ zueinander in einer Ebene um denselben Drehpunkt innerhalb eines äußeren Zylindermantels bewegen können, wobei die Reichweite der Relativbewegung durch am Inneren des Zylindermantels angeordnete und inwärts gerichtete Arretierelemente begrenzt wird. US 6 619 743 B1 lehrt ein Verstellmittel für einen Fahrzeugsitz, in welchem durch ein zusätzliches Erzeugen einer Ekzentrizität zwischen verschiedenen Rotationszentren der Kraftaufwand für eine Verstellung von Sitzelementen beeinflusst werden kann.

Diese Verstellmittel werden zwischen einem Sitzteil und einer Rückenlehne angeordnet und bewirken, dass die Rückenlehne relativ zu dem Sitzteil, beispielsweise zu Komfort- und/oder Easy-Entry-Zwecken, verdreht werden kann. Theoretisch haben diese Verstellmittel einen Verstellbereich von 360°, der aber typischerweise durch Gegebenheiten innerhalb des Fahrzeuges begrenzt werden muss. Oftmals ist es dabei zweckmäßig, den Verstellbereich der Sitze in der ersten Reihe anders zu wählen, als bei den Sitzen in einer dahinterliegenden Reihe. Außerdem soll oftmals der Verstellbereich jeder Rückenlehne nach vorne anders sein als der Verstellbereich nach hinten.

Es war deshalb die Aufgabe der vorliegenden Erfindung, ein Verstellmittel zur Verfügung zu stellen, das auf einfache Weise an den jeweils gewünschten Verstellbereich anpassbar ist.

Gelöst wird die Aufgabe mit einem Verstellmittel eines Fahrzeugsitzes, mit einem Sitzteil und einer Rückenlehne, das den Neigungswinkel einer Rückenlehne relativ zu einem Sitzteil verändert und das einen Sitzteilbeschlag, der mit dem Sitzteil verbunden ist und einen Lehnenbeschlag, der mit der Rückenlehne verbunden ist, aufweist, wobei an den Beschlägen Anschläge vorgesehen sind, die den Verstellbereich der Rückenlehne relativ zu dem Sitzteil begrenzen und wobei der Verstellbereich einstellbar vorgesehen ist.

Die vorliegende Erfindung betrifft ein Verstellmittel, beispielsweise einen Recliner, insbesondere einen Taumelrecliner, mit dem die Neigung der Rückenlehne relativ zu einem Sitzteil verstellt werden kann. In der Regel weist das Verstellmittel einen ersten Beschlag, der mit der Rückenlehne, beispielsweise mit einem Seitenteil der Rückenlehne, und einen zweiten Beschlag, der mit dem Sitzteil verbunden ist, auf. Der Fachmann erkennt, dass mindestens einer der Beschläge auch Teil des Rückenlehnen- bzw. Sitzteilrahmens sein kann.

Die zu diesem Gegenstand der vorliegenden Erfindung gemachten Ausführungen gelten für die anderen Gegenstände der vorliegenden Erfindung gleichermaßen und umgekehrt.

Erfindungsgemäß sind an einem oder beiden Beschlägen mindestens ein Anschlag vorgesehen, der verhindert, dass die Rückenlehne über einen gewünschten Verstellbereich hinaus verstellt wird. Erfindungsgemäß ist dieser Verstellbereich nun einstellbar vorgesehen. Dadurch kann der Verstellbereich nachträglich verändert werden und/oder der Verstellbereich kann an den jeweiligen Fahrzeugsitz angepasst werden. Beispielsweise kann ein Fahrzeugsitz für mehrere Fahrzeugtypen zur Verfügung gestellt werden, wobei der Verstellbereich der unterschiedlichen Fahrzeugtypen zumindest teilweise unterschiedlich sein kann und/oder die Fahrzeugsitze für die erste und die dahinterliegenden Sitzreihen können bauidentisch, jedoch mit unterschiedlichen Verstellbereichen, zur Verfügung gestellt werden.

Gemäß einem weiteren oder einem bevorzugten Gegenstand der vorliegenden Erfindung ist mindestens ein Anschlag, vorzugsweise jedoch beide Anschläge, demontierbar vorgesehen, sodass die Anschläge ausgetauscht und/oder in ihrer Lage verändert werden können, um den Verstellbereich der Rückenlehne zu verändern.

Die zu diesem Gegenstand der vorliegenden Erfindung gemachten Ausführungen gelten für die anderen Gegenstände der vorliegenden Erfindung gleichermaßen und umgekehrt.

Vorzugsweise ist der Anschlag mit einer Schraube an dem Beschlag angebracht.

Gemäß einem weiteren oder einem bevorzugten Gegenstand der vorliegenden Erfindung weist mindestens ein Anschlag eine erste und eine zweite Anschlagfläche auf. Diese Anschlagflächen können wahlweise mit dem Anschlag, der an dem anderen Beschlag vorgesehen ist, in Eingriff gebracht werden. Dadurch kann der gewünschte Verstellbereich verändert werden.

Die zu diesem Gegenstand der vorliegenden Erfindung gemachten Ausführungen gelten für die anderen Gegenstände der vorliegenden Erfindung gleichermaßen und umgekehrt.

Gemäß einem weiteren oder einem bevorzugten Gegenstand der vorliegenden Erfindung weist mindestens ein Anschlag zwei unterschiedliche Begrenzungsbereiche auf. Diese unterschiedlichen Begrenzungsbereiche können wahlweise mit dem Anschlag, der an dem anderen Beschlag vorgesehen ist, in Eingriff gebracht werden. Dadurch kann der gewünschte Verstellbereich verändert werden.

Die zu diesem Gegenstand der vorliegenden Erfindung gemachten Ausführungen gelten für die anderen Gegenstände der vorliegenden Erfindung gleichermaßen und umgekehrt.

Die folgenden Ausführungen gelten für alle Gegenstände der vorliegenden Erfindung gleichermaßen.

Vorzugsweise ist der Anschlag mit einem Befestigungsmittel, insbesondere mit einer Schraube, an dem Beschlag angeordnet.

Gemäß einer bevorzugten Ausführungsform ist der Anschlag verdrehsicher an dem Beschlag angeordnet.

Vorzugsweise ist an dem Beschlag ein Vorsprung vorgesehen, der zur Verdrehsicherung mit einer Einbuchtung und/oder Ausnehmung an dem Anschlag zusammenwirkt.

Ein weiterer Gegenstand der vorliegenden Erfindung ist ein Verfahren zur Einstellung des Verstellbereichs eines Verstellmittels, insbesondere des oben beschriebenen erfindungsgemäßen oder bevorzugten Verstellmittels, bei dem ein Anschlag durch einen anderen Anschlag ersetzt oder derselbe Anschlag in einer veränderten Lage montiert wird, um den Verstellbereich eines Verstellmittels eines Fahrzeugsitzes zu verändern.

Die zu diesem Gegenstand der vorliegenden Erfindung gemachten Ausführungen gelten für die anderen Gegenstände der vorliegenden Erfindung gleichermaßen und umgekehrt.

Vorzugsweise wird der Anschlag demontiert, um 180° gedreht und wieder montiert.

Vorzugsweise ist dieser Anschlag an dem Lehnenbeschlag des Verstellmittels reversibel montiert.

Im Folgenden wird die Erfindung anhand der Figuren 1 bis 7 erläutert. Diese Erläuterungen sind lediglich beispielhaft und schränken den allgemeinen Erfindungsgedanken nicht ein.
Figur 1 zeigt das erfindungsgemäße Verstellmittel mit einem ersten Verstellbereich.
Figur 2 zeigt das Verstellmittel gemäß Figur 1 mit einem anderen Verstellbereich.
Figur 3 ist eine Explosionsdarstellung des Verstellmittels gemäß den Figuren 1 und 2.
Figur 4 zeigt den Anschlag.
Figur 5 zeigt zwei Anschläge mit einem ersten Verstellbereich.
Figur 6 zeigt zwei Anschläge mit einem zweiten Verstellbereich.
Figur 7 zeigt Details des Rückenlehnenbeschlags.

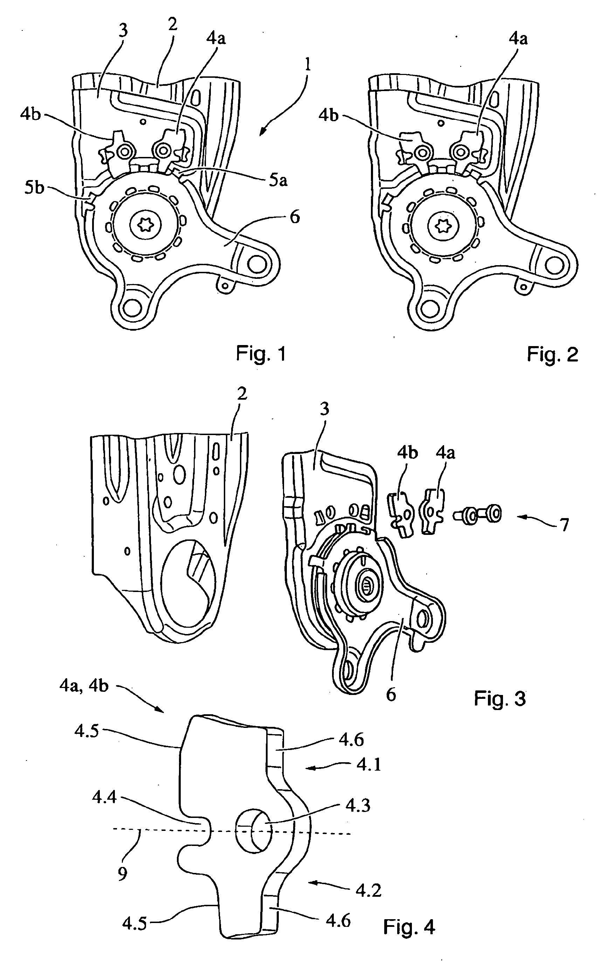

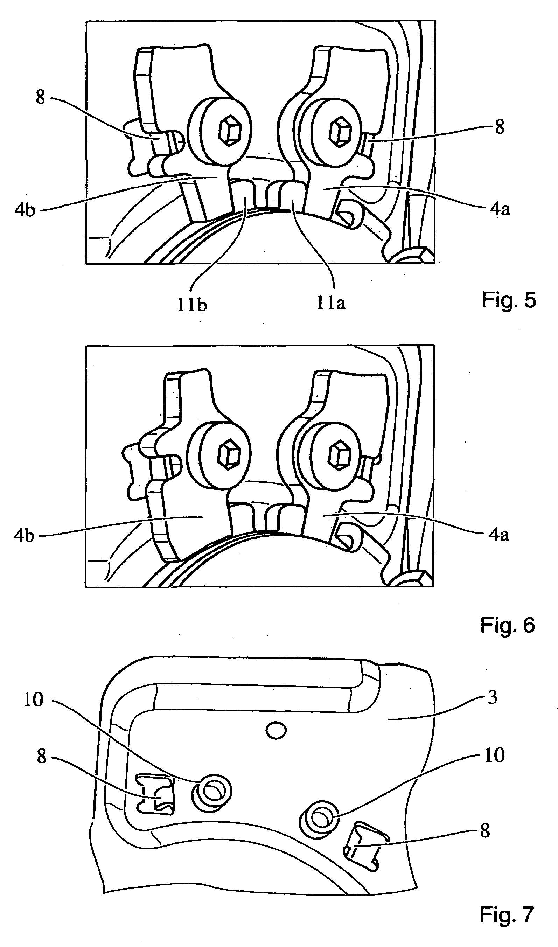

Figur 1 zeigt das erfindungsgemäße Verstellmittel 1, hier einen sogenannten Recliner. Dieser weist einen Lehnenbeschlag 3 auf, der mit einem Seitenteil 2 der Rückenlehne verbunden ist. Dieser Lehnenbeschlag 3 ist drehbar an einem Sitzteilbeschlag 6 vorgesehen. Dieser Sitzteilbeschlag weist zwei Anschläge 5a, 5b auf, die die Drehbewegung des Lehnenbeschlages und damit der Rückenlehne begrenzen und vorzugsweise einstückig mit dem Sitzteilbeschlag vorgesehen sind. Diese Anschläge 5a, 5b wirken jeweils mit einem Anschlag 4a, 4b so zusammen, dass der Verstellwinkel der Rückenlehne begrenzt wird. In der Konstellation gemäß Figur 1, sind die Begrenzungsbereiche der Anschläge 4a, 4b für die Vor- und Rückwärtsdrehung unterschiedlich vorgesehen, was näher anhand von Figur 6 erläutert wird. Die Anschläge 4a, 4b sind jeweils demontierbar an dem Rückenlehnenbeschlag angeordnet, hier mittels Schrauben befestigt.

Figur 2 zeigt im Wesentlichen das Verstellmittel gemäß Figur 1, nur dass in dem vorliegenden Fall die Anschläge 4a, 4b, die Vorwärts- bzw. Rückwärtsbewegung um denselben Betrag, hier jeweils 10°, beschränken, was näher anhand von Figur 5 erläutert wird.

Figur 3 zeigt eine Explosionsdarstellung des Verstellmittels gemäß Figur 2. Es ist deutlich zu erkennen, dass die Anschläge 4a, 4b mittels Schrauben an dem Lehnenbeschlag 3 angeordnet sind, der wiederum an dem Lehnenseitenteil 2, insbesondere stoffschlüssig, angeordnet ist. Die Beschläge 3, 6 sind mittels der Verdrehmechanik (nicht dargestellt) des Verstellmittels miteinander verbunden.

Figur 4 zeigt Details des Anschlags 4a, 4b. Dieser weist eine Ausnehmung 4.3 auf, die von dem Befestigungsmittel 7, beispielsweise der Schraube 7, durchgriffen wird und mit der der Anschlag 4a, 4b an dem Rückenlehnenbeschlag 3 befestigt werden kann. Um zu verhindern, dass sich der Anschlag 4a, 4b unter Belastung verdreht, weist dieser eine Verdrehsicherung 4.4, hier eine Ausnehmung, auf, in die beispielsweise eine Lasche, die aus dem Lehnenbeschlag ausgeformt ist, eingreift. Der Anschlag 4a, 4b weist zwei Begrenzungsbereiche, nämlich einen 20°-Begrenzungsbereich 4.1 und eine 10°-Begrenzungsbereich 4.2 auf. Der Begrenzungsbereich 4.1 reduziert den Drehwinkel des Lehnenbeschlages um 20°, der Begrenzungsbereich 4.2 reduziert die Lehnenverdrehung um 10°. In beiden Bereichen 4.1, 4.2 ist jeweils ein erster Anschlag 4.5 vorgesehen, an dem der Anschlag 5a, 5b anliegt und dadurch die Verdrehung/Verstellung der Lehne begrenzt. Durch eine Drehung des Anschlages 4a, 4b um die Drehachse 9 kann der jeweils gewünschte Begrenzungsbereich mit dem Anschlag 5a, 5b in Eingriff gebracht werden. Dadurch können mit einem Bauteil 4a, 4b wahlweise zwei unterschiedliche Verstellbereiche eingestellt werden. Der Fachmann versteht, dass die Anschläge auch um eine vertikale Achse gedreht werden können, um den jeweiligen Verstellbereich zu verändern. Gegebenenfalls müsste dann die Verdrehsicherung anders vorgesehen werden. Somit können mit einem Verstellmittel sehr einfach unterschiedliche Verstellbereiche realisiert werden, bzw. der Verstellbereich verändert werden. Der Fachmann versteht, dass mit den Anschlägen insgesamt vier unterschiedliche Einstellmöglichkeiten/Verstellbereiche gegeben sind, d. h. zwei unterschiedliche Einstellmöglichkeiten für die nach vorne gerichtete Drehung und zwei Einstellmöglichkeiten für die nach hinten gerichtete Drehung der Rückenlehne. Beide Anschläge 4a, 4b sind vorzugsweise identisch aufgebaut, was deren Herstellungskosten reduziert. Vorzugsweise weist der Anschlag 4 in beiden Bereichen 4.1, 4.2 jeweils einen zweiten Anschlag 4.6 auf. Der zweite Anschlag 4.6 kann sich beispielsweise an den radialen Nasen 11a, 11b (vgl. Fig. 5) abstützen, die vorzugsweise ortsfest vorgesehen sind. Dadurch reduziert sich insbesondere die Belastung des Befestigungsmittels 7 und gegebenenfalls der Verdrehsicherung 4.4, 8.

Figur 5 zeigt die Begrenzungssituation gemäß Figur 2. In dem vorliegenden Fall ist der Anschlag 4 jeweils so montiert, dass die Drehung sowohl nach vorne als auch nach hinten um 10° eingeschränkt ist, wobei der Anschlag 4b für eine Begrenzung der Drehung nach hinten und der Anschlag 4a für eine Begrenzung der Drehung der Rückenlehne nach vorne zuständig ist.

Figur 6 zeigt im Wesentlichen die Konstellation gemäß Figur 5, wobei in dem vorliegenden Fall der Anschlag 4b um seine Achse 9 gedreht worden ist, sodass nunmehr der Begrenzungsbereich 20° mit dem Anschlag 5b zusammenwirkt, d. h. die Drehung der Rückenlehne nach hinten ist in dem vorliegenden Fall stärker begrenzt, als die Drehung nach vorne.

Figur 7 zeigt ein Detail des Rückenlehnenbeschlages 3. Dieser weist zwei Aus- und/oder Umformungen 10 auf, in die die Schraube hineingesteckt, vorzugsweise hineingedreht wird und dadurch der Beschlag 4a, 4b an dem Lehnenbeschlag demontierbar befestigt wird. Durch eine Ausformung weist der Lehnenbeschlag Laschen 8 auf, die jeweils in die Ausnehmung 4.4 eines Beschlages 4 eingreifen und dadurch verhindern, dass sich der Beschlag im montierten Zustand ungewollter Weise verdreht.

Durch ein Federmittel, das vorzugsweise mit beiden Anschlägen 4 zusammenwirkt, kann der jeweilige Anschlag 4 mit der Lasche 8 im Eingriff gehalten werden bzw. es kann eine Geräuschentwicklung unterbunden werden.

### Bezugszeichenliste:

- 1: Verstellmittel, Recliner
- 2: Lehnenseitenteil
- 3: Lehnenbeschlag
- 4a, 4b: Anschlag
- 4.1: Begrenzungsbereich, 20° Begrenzung
- 4.2: Begrenzungsbereich, 10° Begrenzung
- 4.3: Ausnehmung
- 4.4: Verdrehsicherung, Einbuchtung, Ausnehmung
- 4.5: erste Anschlagsfläche
- 4.6: zweite Anschlagfläche
- 5a, 5b: Anschlag an dem Sitzteilbeschlag
- 6: Sitzteilbeschlag
- 7: Befestigungsmittel, Schraube
- 8: Ausformung, Vorsprung, Verdrehsicherung
- 9: Drehachse
- 10: Gewinde
- 11a: Abstützung, Abstützlasche
- 11b: Abstützung, Abstützlasche

## Patentansprüche

1. Verstellmittel (1) für eines Fahrzeugsitzes, mit einem Sitzteil und einer Rückenlehne, das den Neigungswinkel einer Rückenlehne relativ zu einem Sitzteil verändert und das einen Sitzteilbeschlag (6) aufweist, der mit dem Sitzteil verbindbar ist und einen Lehnenbeschlag (3), der mit der Rückenlehne verbindbar ist, aufweist und die Beschläge (3, 6) Anschläge (4a, 4b, 5a, 5b) aufweisen, die den Verstellbereich der Rückenlehne relativ zu dem Sitzteil begrenzen, wobeider Verstellbereich einstellbar vorgesehen ist, **dadurch gekennzeichnet, dass** mindestens einer der Anschläge (4a, 4b, 5a, 5b)
- eine erste und eine zweite Anschlagfläche (4.5, 4.6) aufweist; und
- zwei unterschiedliche Begrenzungsbereiche (4.1, 4.2) aufweist; und
- demontierbar, um 180° drehbar und wieder montierbar vorgesehen ist.

2. Verstellmittel nach Anspruch 1, **dadurch gekennzeichnet, dass** der Anschlag (4a, 4b) mit einem Befestigungsmittel (7), insbesondere mit einer Schraube an dem Beschlag (3, 6) angeordnet ist.

3. Verstellmittel nach einem der voranstehenden Ansprüche, **dadurch gekennzeichnet, dass** der Anschlag (4a, 4b) verdrehsicher an dem Beschlag (3, 6) angeordnet ist.

4. Verstellmittel nach Anspruch 3, **dadurch gekennzeichnet, dass** an dem Beschlag (3, 6) ein Vorsprung (8) vorgesehen ist, der zur Verdrehsicherung mit einer Einbuchtung und/oder Ausnehmung (4.4) an dem Anschlag zusammenwirkt.

5. Verfahren zur Einstellung des Verstellbereichs eines Verstellmittels gemäß einem der voranstehenden Ansprüche, wobei ein Anschlag (4a, 4b) durch einen anderen Anschlag ersetzt oder in einer veränderten Lage montiert wird, **dadurch gekennzeichnet, dass** der Anschlag (4a, 4b) demontiert, um 180° gedreht und wieder montiert wird.

## Claims

1. Adjustment means (1) for a vehicle seat, having a seat part and a backrest which alters the angle of inclination of a backrest relative to a seat part and which has a seat part fitting (6) which can be connected to the seat part and a backrest fitting (3) which can be connected to the backrest, and the fittings (3, 6) comprise stops (4a, 4b, 5a, 5b) which limit the adjustment range of the backrest relative to the seat part, wherein the adjustment range is provided to be adjustable, **characterized in that** at least one of the stops (4a, 4b, 5a, 5b)
- has a first stop surface and a second stop surface (4.5, 4.6); and
- has two different limiting regions (4.1, 4.2); and
- is provided to be able to be dismantled, rotated by 180° and remounted.

2. Adjustment means according to Claim 1, **characterized in that** the stop (4a, 4b) is arranged on the fitting (3, 6) by a fastening means (7), in particular by a bolt.

3. Adjustment means according to either of the preceding claims, **characterized in that** the stop (4a, 4b) is arranged on the fitting (3, 6) so as to be non-rotatable.

4. Adjustment means according to Claim 3, **characterized in that** a projection (8) is provided on the fitting (3, 6), said projection cooperating with a depression and/or recess (4.4) on the stop as an anti-rotation stop.

5. Method for adjusting the adjustment range of an adjustment means according to one of the preceding claims, wherein one stop (4a, 4b) is replaced by a different stop or is mounted in a different position, **characterized in that** the stop (4a, 4b) is dismantled, rotated by 180° and remounted.

## Revendications

1. Moyen de réglage (1) pour un siège de véhicule, comprenant une partie de siège et un dossier, qui modifie l'angle d'inclinaison d'un dossier par rapport à une partie de siège et qui présente une ferrure de partie de siège (6) qui peut être connectée à la partie de siège et une ferrure de dossier (3) qui peut être connectée au dossier, et les ferrures (3, 6) présentant des butées (4a, 4b, 5a, 5b) qui délimitent la plage de réglage du dossier par rapport à la partie de siège, la plage de réglage étant prévue de manière à pouvoir être ajustée, **caractérisé en ce qu'**au moins l'une des butées (4a, 4b, 5a, 5b)
- présente une première et une deuxième surface de butée (4.5, 4.6) ; et
- présente deux régions de limitation différentes (4.1, 4.2) ; et
- est prévue de manière à pouvoir être démontée, tournée de 180° et remontée.

2. Moyen de réglage selon la revendication 1, **caractérisé en ce que** la butée (4a, 4b) est disposée avec un moyen de fixation (7), en particulier avec une vis, sur la ferrure (3, 6).

3. Moyen de réglage selon l'une quelconque des revendications précédentes, **caractérisé en ce que** la butée (4a, 4b) est disposée de manière fixée en rotation sur la ferrure (3, 6).

4. Moyen de réglage selon la revendication 3, **caractérisé en ce qu'**une saillie (8) est prévue sur la ferrure (3, 6), laquelle coopère pour la fixation en rotation avec un renfoncement et/ou un évidement (4.4) sur la ferrure.

5. Procédé d'ajustement de la plage de réglage de moyen de réglage selon l'une quelconque des revendications précédentes, une butée (4a, 4b) étant remplacée par une autre butée ou étant montée dans une position variable, **caractérisé en ce que** la butée (4a, 4b) est démontée, tournée de 180° et remontée.
